# EUROPEAN PATENT APPLICATION

(11) **EP 4 432 187 A1**
(43) Date of publication of application: **18.09.2024**
(21) Application number: 23161607.9
(22) Date of filing: 13.03.2023
(51) Int. Cl.: G06Q 10/10, G06Q 50/04

(54) **PROCESSING A PRIMARY PRODUCT INTO A SECONDARY PRODUCT**

(71) Applicant: BASF SE, 67056 Ludwigshafen am Rhein (DE)
(72) Inventor: HARTMANN, Michael, 49448 Lemfoerde (DE); RUDOLPH, Hans, 49448 Lemfoerde (DE); WINDELER, Ingo, 49448 Lemfoerde (DE); PACK, Robert, 67061 Ludwigshafe am Rhein (DE); WINKLER, Christian-Andreas, 67056 Ludwigshafen am Rhein (DE)
(74) Representative: Horn Kleimann Waitzhofer Schmid-Dreyer Patent- und Rechtsanwälte PartG mbB

(57) **Abstract**

A method (100) for processing at least one primary product (A,B) into a secondary product (C), including the steps: providing (S15) at least one primary product (A,B); processing (S19) the at least one primary product (A,B) into a quantity of a secondary product (C) by a processing device (11); generating (S20) a report by a state reporting device (14) associated with the processing device (11), wherein said report includes at least one state value indicative of a processing state during the processing step (S19); generating (S28) an unique object identifier indicative of said quantity obtained by said processing during the processing step (S19); generating (S29) a data structure (4) having at least two data items (5), wherein one data item (5) holds the object identifier, and wherein one further data item (5) holds said generated report; and providing (S52) said quantity obtained by said processing during the processing step (S19).

## Description

This disclosure relates to a method for processing at least one primary product into at least one secondary product. Further, this disclosure relates to a data structure having at least two data items, a data carrier signal, a method for producing a secondary product from a quantity of a primary product, and a computer program product.

In order to produce advanced products, it is desired to increase a knowledge of properties of these products. It is therefore an object of the present disclosure to provide means for transferring more precisely defined properties of a product to a next processing phase within a product life cycle.

According to one aspect of the invention, a method for processing at least one primary product into at least one secondary product is suggested. The method includes providing at least one primary product; processing the at least one primary product into a quantity of a secondary product by a processing device; generating a report by a state reporting device associated with the processing device, wherein said report includes at least one state value indicative of a processing state during the processing step; generating a unique object identifier indicative of said quantity, which quantity is obtained by said processing during the processing step; generating a data structure having at least two data items, wherein one data item holds the object identifier, and wherein one further data item holds said generated report; and providing said quantity obtained by said processing during the processing step. When performing the suggested method, a data structure is made available, which identifies the processing and/or a property of the quantity of the secondary product. The data structure can be transferred to a next processing phase together with the associated quantity. Thus, the at least one property of the secondary product is known with increased precision.

The processing device may include an arrangement and/or a series of processing devices. A processing device may be any device that is configured to process the at least one primary product into at least one secondary product. Preferably, the primary product is processed into the secondary product by means of the processing device.

The primary product preferably differs from the secondary product in at least one product quality. A product quality may be a chemical, physical, and/or mechanical property of the product. A product quality of the secondary product is affectable by the recorded state of the processing by the processing device.

The data structure is preferably configured to represent a production process performed during producing the distinguishable quantity of the secondary product. The data structure is associated with one processing and/or one quantity from said processing. This association is made by the unique object identifier. Thus, this object identifier is the own object identifier of the data structure, as it identifies and/or indicates the object of the data structure, which is specified in-depth by the remaining data items.

A state reporting device may be configured to monitor a state of the processing and to report the monitored state and/or a calculation result based on the monitored state. Examples for state reporting devices include a sensor, including a so-called edge device, a driver, an actuator, and/or an evaluation software connected in series therewith. The report may include a time series of state values, as this increases a precision of the report. If there are more than one process states reported, then it is preferred to have multiple synchronized time series of different or distinguishable state values. This step facilitates an optional step of deriving a state value of the processing. The at least one process state during the step of processing the at least one primary product into at least one secondary product is recorded. That is, the state values express the conditions, during which the secondary product was obtained. It is preferred, if the record is generated during the processing step. However, there may be applications of this method, in which is it preferrable to generate or at least finalize the record after the second product is obtained. For example, a backwards filter may be applicable only after a time series is completed.

Optionally, during said providing said quantity may be separately provided, and the method may include: linking the separated quantity to the generated data structure. As the processed quantity is provided in a separated manner and is linked to the data structure, the knowledge of the property or properties and the quantity in a distinguishable manner are both available individually and in combination. Providing the quantity separately includes at least separating the quantity. Separately providing may include providing in a transportable form.

Said separately providing may optionally include: packaging said quantity, that is obtained from said processing step, into a package. If the quantity it packed, it is easier to identify. "A package" preferably includes one package or at least one package.

Optionally, said linking includes attaching a link object to the package. Thus, a user can follow the attached link to the data structure. This aspect is for example beneficial in handling the quantity. Preferred examples for attaching said link include: printing the link object on the package, writing the link object to a data storage attached to the package, and/or providing the link object within the package. Each of these preferred examples offers a unique combination of accessibility to the link and permanence of the link.

The method may optionally be applied to processes where during said processing step the at least one primary product is processed into multiple quantities of the same secondary product and/or different secondary products, wherein at least the steps: generating a unique object identifier, generating a data structure, providing said quantity, and, if applicable, the steps: linking the separated quantity and attaching the link object, may optionally be performed for each of multiple of said quantities. Thus, a precise knowledge of multiple quantities of secondary product(s) can be gained.

According to one aspect of the invention, another method for processing at least one primary product into at least one secondary product is suggested. The method includes: providing at least one primary product; processing the at least one primary product into a quantity of a secondary product by a processing device; generating a report by a state reporting device associated with the processing device, wherein said report includes at least one state value indicative of a processing state during the processing step; generating a unique object identifier indicative of said processing during the processing step; generating a data structure having at least two data items, wherein one data item holds the object identifier, and wherein one further data item holds said generated report; and providing said quantity obtained by said processing during the processing step. When performing the suggested method, a data structure is made available, which identifies the processing and/or a property of the quantity of the secondary product. Thus, at least one property of the secondary product, that results from said processing, is implicitly knows in the data structure, and it can be transferred together with the quantity to a next processing phase.

According to another option, the above methods may be combined, such that the object identifier is indicative of the said processing during the processing step and of the quantity of the secondary obtained from said processing during the processing step. This method may be advantageously applied for example in cases, where several secondary products are obtained from the same processing.

The following options apply to the above method where the object identifier is indicative of the processing as well as to the above method where the object identifier is indicative of the quantity.

Now, some method options are laid down, which may be applied during or after said data structure generation. Especially in this regard, a "setting a data item" of the data structure such that it holds a specific value may include one of: generating the data item while generating the data structure and assigning the specific value to the data item, expanding the data structure by adding the data item and assigning the specific value to the data item, and/or providing the generated data structure having the data item and assigning the specific value to the data item.

According to a preferred option, said providing said obtained quantity includes: providing the separated quantity at an identifiable location; and wherein the method includes: setting a data item of the data structure such that it holds a location identifier indicative of the identifiable location. Thus, a user can easily locate a quantity of the product having specific product properties.

The method also may include: providing a data owner indicator indicative of a natural or legal person and/or a group thereof; and setting a data item of the data structure such that it holds the data owner indicator. The data owner indicator preferably represents one or more persons responsible for holding, maintaining, updating, amending, and/or the like of the data structure. This feature makes it easier to have the precise knowledge centralized, like stored availably on a server, with clear responsibility. Thus, handling the data structure does not become more difficult when access to at least one of many data structures is granted to at least one of many parties.

The method may include: providing a quantity owner indicator indicative of a natural or legal person and/or a group thereof; and setting a data item of the data structure such that it holds the quantity owner indicator. This feature realizes the task to describe an economic property of the quantity. However, opposed to a concept of having a parallel data structure for economic properties of the quantity in addition to the above-described data structure for process properties, it is easier to handle and saves space and computation power to include all features in one data structure. That is, there is a technical advantage of saving resources in the technical solution of handling technical and economical properties in a common data structure.

Further, the method may include: setting a data item of the data structure such that it holds a processing device identifier indicative of the processing device used to obtain the distinguishable quantity. If there are two separate processing devices for the same task, then it is highly likely that a secondary product processed in the one processing device differs from a secondary product processed in the other processing device. However, it is also possible that the state recording device may not be able to perceive or record these differences and/or it is possible that it is not yet known at the time of processing which difference has which impact later on. Thus, there are many use cases where it is beneficial to know which processing device was involved in obtaining a distinguishable quantity.

The method may also include: setting a data item of the data structure such that it holds a processing time indicator indicative of when the distinguishable quantity was produced. Preferably, the processing time indicator includes a start time of the processing, such that another state value might in retrospect be traceable from device logs or the like. Preferably, the processing time indicator includes a stop time of the processing, such that an age of the product is determinable. As an alternative or additional option, the method may include: determining a production timestamp indicative of a time of said processing step and/or said step of separately provided; and setting a data item of the data structure such that it holds said production timestamp.

Preferably, the method may include: setting a data item of the data structure such that it holds a state reporting device identifier indicative of the state reporting device used to obtain the report. This information, too, allows to take into account individual sensitivity differences between different state report devices.

There might be the case where a primary product may not be delivered in distinguishable quantity, for example via a buffer tank or by pipeline. For example in these cases, it may be advantageous if said step of providing at least one primary product included: providing a primary product lot identifier indicative of a lot of the primary product; and wherein the method further includes: setting a data item of the data structure such that it holds the primary product lot indicator.

In order to improve a reliability and/or acceptance of the report(s) included in the data structure, said method may include: taking a sample from the distinguishable quantity of the secondary product; generating a test result indicative of at least one material property of the secondary product of the processed and/or separated quantity; generating a test result indicator indicative of the generated test result; and setting a data item of the data structure such that it holds the test result indicator. Preferably, the sample is taken in a time frame from a beginning of the processing until after the distinguishable quantity is separately provided.

According to one option, the method may include: providing a pre-set characteristics ruleset, which specifies at least one characteristic value determination rule configured to determine at least one characteristic value based on at least one record, and which specifies at least one record applicable to the characteristics ruleset; and determining at least one characteristic value by applying the at least one record specified by the characteristics ruleset to at least one rule specified by the characteristics ruleset. That option is useful for a customer to decide whether a distinguishable quantity fits a pre-set technical requirement without disclosing all process data. Preferably, the method further includes: setting a data item of the data structure such that it holds the at least one determined characteristic value. Thus, the determination can be stored and retrieved without the need to spend again computation time for repeating a task.

There might be the case where a data structure is to be shared with a competitor, customer, and/or any other 3rd party, in which case a confidentiality cannot be guaranteed. If the method included: encrypting at least one data item, then confidentiality regarding the encrypted data item(s) content can be maintained.

In order to increase a knowledge regarding a specific quantity, said method may include: generating another report by another state reporting device associated with the processing device, wherein said other report includes at least one further state value indicative of a processing state during the processing step; and setting a data item of the data structure such that it holds said other generated report.

In order to further process the secondary product, a classification or the like of the secondary product can be important. For example, it might be necessary to use only secondary products from a specific bin within a specification for the secondary product, or to mix secondary products of different bins to equally reflect a whole specified range, in order to obtain a desired quality of a next level product. Thus, the method may include: providing a statistical ruleset configured for determining a statistical measure of the at least one report; determining a single statistical measure based on the at least one report and the statistical ruleset; and setting a data item of the data structure such that it holds said single statistical measure.

Further, the method may include: signing the data structure by setting a data item of the data structure such that it holds a signature indicative of natural or legal person and/or a group thereof; and setting a data item of the data structure such that it holds a cryptographic representation of the signed data structure. The signature preferably is an electronic signature. The signature usually is a verifiable, such that it is verifiable which legal or natural person and/or which group has signed the data structure. There are many well-established methods for signing data, which are could advantageously be employed here. Signing data usually serves data security purposes.

Further, the method may include: determining a cryptographic representation of the data structure associated with the quantity of the primary product; and setting a data item of the secondary data structure such that it holds said cryptographic representation of the data structure associated with the quantity of the primary product. This option enables a blockchain, which is beneficial in bigger ecosystems, where many parties contribute data structures.

Optionally, the method may include: providing at least one distinguishable quantity of a primary product; providing, for each provided distinguishable quantity of a primary product, a data structure associated with the distinguishable quantity, wherein said data structure includes one data item holding an object identifier indicative of the distinguishable quantity of the primary product, and one further item holding a report including at least one state value indicative of a processing state of a process performed during obtaining the primary product of the distinguishable quantity indicated by the object identifier; and generating the (new) data structure, which was mentioned in the above options, such that it also includes a further data item holds the object identifier indicative of the quantity of the primary product. This option allows to additionally access not only the process state(s) of the latest processing, but also a history of process state(s) of pre-processing(s). All these process states are individual and specific for the secondary product of the quantity, which is indicated by the own object identifier held in the newly generated data structure.

Another main option of the invention is this method, which preferably includes: providing access to a database that is configured to include multiple data structures; and adding or entering into the database the data structure associated with the quantity of the secondary product. A data set is useful for example not only for adjusting parameters in a directly succeeding processing step, but for it may be used in many following processing steps until a final product and even afterwards during recycling the final product and/or recycling of excess product. All these process steps may be performed by different entities at different times and locations, wherein often a succeeding steps might even be unknown at the time of producing a certain quantity. By adding the data structure(s) into the database, the content(s) of the data structure(s) is/are reliably provisioned, such that the precise product property knowledge is reliably procured. Thus, it is easily and reliably retrievable by any following process step.

In the art are known many database techniques. Any database technique may be employed to realize this database, as long as it accessibly holds the data structures. Preferably, a distributed database, such as a cloud service, may be used. In order to easily communicate data structures with many participants, an internet-based database is preferred.

Although the focus of the data structure as well as of the database is on providing technical properties for technical processes, it may be essential to recognize that also a per-se non-technical information, such as a location or an ownership of a specific quantity, can have a strong technical impact, for example in material handling and/or in acceleration adjustments of continuous processing devices. Thus, any of the above methods may include: generating a status indicator indicative of a current status of a variable factor or state of the distinguishable quantity indicated by the object identifier; and setting a data item of the primary data structure such that it holds said status indicator. Preferably, the status includes indicator includes and/or is indicative of at least one current status. Example for a current status may include: an expected production date, an actual production date, a storage location, an ownership, a reservation, an intended disposition, an intended usage, a percentage of remaining quantity, an actual disposition, an actual usage, a price, and/or the like.

Optionally, the method further includes: providing at least one distinguishable quantity of a primary product; providing, for at least one provided quantity of a primary product, a data structure associated with the quantity, wherein said data structure includes one data item holding an object identifier indicative of the quantity of the primary product, and one further data item holding a report including at least one state value indicative of a processing state of a process performed during obtaining the primary product of the quantity indicated by the object identifier; and setting a data item of the secondary data structure such that it holds the object identifier indicative of the quantity of the primary product. Thus, the data structure can reflect not only the state values of one processing but, but it can point and/or refer to a data structure that reflect a state value of a preceding process step. This option thus provides a deeper and more precise technical specification of a certain product. Preferably, the method further includes adding the primary data structure to the database.

According to an aspect of the invention, a method for processing at least one primary product into at least one secondary product is suggested. The method includes the steps: providing at least one quantity of a primary product; providing, for at least one provided quantity of a primary product, a data structure associated with the quantity, wherein said data structure includes one data item holding an object identifier indicative of the quantity of the primary product, and one further data item holding a report including at least one state value indicative of a processing state of a process performed during obtaining the primary product of the quantity indicated by the object identifier; processing the at least one primary product into a quantity of a secondary product by a processing device; generating an unique object identifier indicative of said quantity obtained by said processing during the processing step; generating a new data structure having at least two data items, wherein one data item holds the generated object identifier indicative of the quantity of the secondary product, and wherein one further data item holds the object identifier indicative of the quantity of the primary product; and providing said quantity obtained by said processing during the processing step. This method, too, provides a deeper and more precise technical specification of a certain product.

According to a related aspect of the invention, a method for generating a data structure is suggested. Said method includes providing access to a database that is configured to include multiple data structures; providing at least one report that includes at least one state value indicative of a processing state during a processing step; providing a status indicator, indicative of a current status of a distinguishable quantity obtained by a process, of which a processing state is indicated by the at least one report; generating an unique object identifier indicative of the distinguishable quantity of a product, that is obtained by performing the processing of which the report indicates a processing state; generating a data structure having at least two data items, of which: one data item holds the generated object identifier, at least one further data item holds the provided report; and adding or entering into the database the data structure associated with the quantity of the primary product. By entering the data structure(s) into the database, the content(s) of the data structure(s) is/are reliably provisioned, such that the precise product property knowledge is reliably procured. Thus, the precise product property is easily and reliably retrievable and usable by any following process step.

This method may be applied in many technical fields. However, preferably, the method is applied to the field of chemistry. Thus, preferably, the primary product is a chemical product and/or a chemical raw material, and the secondary product is a chemical product. A chemical product is defined by a chemical description and optionally a physical, electrical and/or mechanical description.

According to another aspect of the invention, a method for processing at least one primary product into a secondary product is suggested. The suggested method includes: providing at least one distinguishable quantity of a primary product; providing, for each provided distinguishable quantity of a primary product, a data structure associated with the distinguishable quantity, wherein said data structure includes one data item holding an object identifier indicative of the distinguishable quantity of the primary product, and one further item holding a report including at least one state value indicative of a processing state of a process performed during obtaining the primary product of the distinguishable quantity indicated by the object identifier; processing the at least one primary product into a quantity of a secondary product by a processing device; generating a unique object indicative of the quantity of the secondary product; generating a new data structure having at least two data items, wherein one data item holds the generated object identifier indicative of the quantity of the secondary product, and wherein one further data item holds the object identifier indicative of the quantity of the primary product; and providing said quantity obtained by said processing during the processing step. Performing the method of this aspect thus generates a chain of data structures, which are associated with each other by citing the object identifier(s) of the primary product(s). Thus, a data structure of a secondary product points towards a history or a log of process state values of process steps performed previous to this process step. This method thus allows a deep understanding of properties of the secondary product, which do not result from the processing step from this primary product to this secondary product.

According to an option, the method of this aspect may include: generating a report by a respective state reporting device associated with the processing device, wherein said report includes at least one state value indicative of a processing state during the processing step; and setting a data item of the secondary data structure, such that it holds said generated report. Thus, the data structure informs about one or more process states of this processing step as well as it points to one or more pre-process states via the primary product object identifier.

Also in this method, it is optionally possible to provide a lot of a primary product. In this case it is preferred to include in the method: providing a primary product lot identifier indicative of said lot of the primary product; and setting a data item of the data structure such that it holds the primary product lot indicator. Thus, it is possible to include detailed information also on one or more primary products, on which no data structure is supplied. Again, technical properties of the secondary product are more precisely rendered, which paves the way for multiple technical improvements.

Preferably, a data item of the primary data structure holds a production timestamp indicative of a time when said primary product was produced. In order to provide a user with an age of the primary product as a product property, said method may include: determining an age indicator indicative of a duration from the time indicated by said production timestamp until a time when the primary product is provided; and setting a data item of the primary data structure such that it holds said age indicator, and/or setting a data item of the secondary data structure such that it holds said age indicator linked with the object identifier of the primary data structure.

There may be a case, where different primary quantities of the same primary product and the same number of primary data structures, each of which being associated with a different one of the quantities of the primary product, are available, wherein each primary data structure has a data item holding a production timestamp indicative of a time when the respective primary product was produced. Preferably, the method includes performing, in this case, the following steps: determining for each primary quantity an age from the time indicated by said respective production timestamp until a present time; and choosing at least one of said primary quantities based on its respective age and a pre-set ruleset; wherein the chosen primary quantity or primary quantities is/are provided in said providing step. Thus, a primary product can be selected based on its respective age. Thus, an old product can be selected before it degrades too much and becomes out-of-specification. It is possible to wait until an undesired volatile component of the primary product is reduced in concentration.

In order to increase a recycling performance, wherein said secondary product is a final product; the method may include: attaching an identifier device to said secondary product, wherein said identifier device is indicative of the object identifier of the secondary data structure. Thus, a recycling process may include to read the identifier device, such as an RFID tag, a serial number, and/or a QR code at the final product and/or inside of the final product, and then determine an exact composition and/or property of the final product, such that a quality of a recycling process product is improved.

The aspects and options within this invention description can be combined. Thus, the method of this option may additionally include the method steps of any other method or option mentioned above and/or below to achieve the same advantageous effect.

Another aspect of the invention refers to a data structure having at least two data items, wherein: one data item holds an unique object identifier, that is indicative of a processing during a processing step and/or of a quantity obtained by said processing during said processing step; and one further data item holds a report, which includes at least one state value indicative of a processing state of said processing step. This data structure is a means for more precise knowledge of a secondary product, as it is holds the report and the object identifier in mutual association.

The data structure may include a data item holding a package identifier indicative of the at least one package having said quantity indicated by the object identifier. Thus, a link between the data structure and the distinguishable quantity can easily be included into the data structure.

The data structure may include a data item holding a location identifier indicative of an identifiable location of said quantity indicated by the object identifier. Thus, the quantity can easily be found and handled.

The data structure may include a data item holding a data owner indicator indicative of a natural or legal person and/or a group thereof owning this data structure. Thus, even in complex scenarios with many data structures from many sources and with many data structure consumers, it is easily documented who is responsible for maintaining said data structure.

The data structure may include a data item holding a quantity owner indicator indicative of a natural or legal person and/or a group thereof owning said quantity indicated by the object identifier. Thus, an ownership of the quantity is easily documented.

The data structure may include a data item holding a primary product lot identifier indicative of a lot of a primary product to the secondary product of said quantity, that is indicated by the object identifier. Thus, a user can easily trace which lot of a primary product has been used for which quantity of the secondary product. This option allows to fulfill legal regulations concerning source documentation, even in said complex scenarios.

The data structure may include a data item holding a test result indicator indicative of the generated test result based on a sample taken from said quantity indicated by the object identifier. This renders more precisely the product properties of the secondary product.

The data structure may include a data item holding another report, that is configured to include at least one state value indicative of a processing state of a step of processing at least one raw material into said quantity of said product. This again increases product property knowledge.

The data structure may include an encrypted data item. This can guarantee confidentiality.

The data structure may include a data item may include a signature configured to sign the data structure or at least a part thereof; and a data item may hold a cryptographic representation of the signed data structure. This can guarantee authenticity of the precise property knowledge contained in the data structure.

The data structure may include a data item that holds a cryptographic representation of a data structure associated with a quantity of a primary product, that is a predecessor to the quantity of the product indicated by the own object identifier. This option allows a blockchain feature such that it is possible for a customer to reliably reproduce a history of predecessor products and their properties. One use case might be a carbon footprint determination.

The data structure may have at least two data items, wherein: one data item holds a second object identifier, that is configured to be a unique object identifier for identifying a processed quantity of a product; at least one data item holds a first object identifier, that is configured to be a unique object identifier for identifying a primary quantity of a primary product processed to a quantity identified by the second object identifier. Thus, the data structure technically represents technical features of the secondary product, which may originate from the technical process of obtaining said secondary product, as well as one or more pre-processes thereof. In the result, a more precise technical description can be achieved.

Another aspect of this invention is a data carrier signal carrying a data structure as described above, and/or as provided by the above-described method. This is beneficial for distributed systems, such as internet-connected manufacturing systems.

According to another aspect of this invention a database is suggested. The database includes or at least it is configured to include multiple data structures. Each data structure includes at least two data items, of which: one data item holds an own object identifier indicative of a distinguishable quantity of a product; and one further data item holds a report including at least one state value, and preferably a time series of state values, indicative of a processing state of a process, which process was previously performed during obtaining the product of the distinguishable quantity indicated by the own object identifier. By adding the data structure(s) into the database, the content(s) of the data structure(s) is/are reliably provisioned, such that the precise product property knowledge is reliably procured. Thus, the precise product property is easily and reliably retrievable and usable by any following process step. The database may preferably be computer-implemented.

Next will be presented methods using the data structure and/or the database in a next producing step. Thus, the above secondary product may now be referred to as a primary product for a following processing.

According to an aspect of the invention, another method for producing a secondary product from a quantity of a primary product is suggested. The method includes: providing the above-defined data structure and/or the data structure as generated by any above method; providing the quantity of a primary product, which quantity is indicated by the own object identifier held by the data structure; reading from the data structure a report, which includes at least one state value indicative of a processing state of the primary product of the provided quantity; adjusting a process parameter of a processing device based on the read report; and processing the primary product of the provided quantity into the secondary product by means of the processing device or by the processing device. In other words: the method according to this aspect makes use of the documented precise technical properties of the product, which is associated with the data structure. By applying this method, it is possible to technically adapt a process to one or more technical properties of the primary product, thus generating a secondary product with advanced properties. The secondary product may have more evenly distributed properties, and/or it can be tuned to a tighter specification.

Another aspect of this invention is: using at least one data item of the above-defined data structure and/or of the data structure as generated by any above method for adjusting, especially as a basis for said adjusting, of a process parameter of a processing device for processing a quantity of a primary product, which quantity is indicated by the own object identifier held by the data structure. This use of the data structure and the associated quantity has the same advantages as the above method.

Another aspect of this invention relates to a method for producing a secondary product from a quantity of a primary product. The suggested method includes: providing the above-defined data structure and/or the data structure as generated by any above method; providing the quantity of the primary product identified by the object identifier held by a data item of the data structure; reading from the data structure a report, which includes at least one state value indicative of a processing state of the primary product of the provided quantity; processing the primary product of the provided quantity into the secondary product by means of a processing device or by a processing device; recording at least one of: a state value of the processing device during said processing step, a deviation value of the recorded state value from a target state value, a product property value of the secondary product during and/or after said processing step, and/or a deviation value of the recorded product property value from a target property value; and providing a data set including the at least on recorded value and the object identifier indicative of the provided quantity of the primary product. The method according to this aspect has the advantageous effect to generate a data structure that can be used to improve the original or previous processing, where a primary product has been processed to a secondary product, based on an analysis generated during a later or follow-up processing, where the secondary product is processed into a tertiary product (a secondary product to the original secondary product). Thus, during a few process cycles, the original process can be optimized to the following process. In the end, an overall quality of the final product is improved.

According to a further aspect of the invention, a method for determining a characteristic value of a distinguishable quantity of a product is suggested. The method includes: providing a pre-set characteristics ruleset, which specifies at least one characteristic value determination rule configured to determine at least on characteristic value based on at least one record, and which specifies at least one record applicable to the characteristics ruleset; accessing via the database one data structure held by the database; reading at least one report held in an data item of the accessed data structure specified by the characteristics ruleset; determining at least one characteristic value by applying the at least one read record specified by the characteristics ruleset to at least one rule specified by the characteristics ruleset. Preferably, said outputting includes setting a data item of the accessed data structure such that it holds the determined single degree of uniformity. The method of this aspect has the advantage of providing a single criterion for choosing a distinguishable quantity of a product which matches even very narrow specifications.

This method may optionally include: performing in a case, where a data item of the data structure holds a object identifier indicative of a distinguishable quantity of a primary product, that is primary to the secondary product of the distinguishable quantity indicated by the own object identifier, the following steps, preferably in a recursive manner: accessing via the database a data structure, of which a data item holds an own object identifier that matches the object identifier of the primary product; and reading at least one report held in an data item of the accessed data structure specified by the characteristics ruleset; and wherein said at least one characteristic value is determines also by applying the at least one read record to at least one rule specified by the characteristics ruleset. These steps include previous process states into said determination of the single criterion, thus increasing a precision of choosing the best match between different quantities of a product and a demand of a following process.

Preferably, this method has: setting a data item of the accessed data structure such that it holds the at least one determined characteristic value. Thus, the determined characteristic value can be stored and retrieved in order to save computation time in the future.

Further, it can be useful to speed up an automated or manual selection of matching quantities, if the method includes this option: the pre-set characteristics ruleset includes at least two value ranges for each specified record, which ranges differ in at least one boundary value; and wherein the determined characteristic value is indicative of a bin defined by the value ranges. In other words, this option enables a binning of quantities.

Preferably, the method may have: adding to a selection list an own object identifier held in a data item of the accessed data structure if a pre-set criterion is matched by the determined at least one characteristic value. Thus, if multiple data structures match the criterion, the results can be stored in a list in order to not again spending computation energy on this task, but rather investigating further only the results within the selection list. A stricter approach with a probably smaller selection list result is achieved, when the own object identifier of the accessed data structure is added to the selection list only if a pre-set criterion is matched by each determined characteristic value.

According to another aspect of this invention, a method according to producing a secondary product with a processing device, wherein the method includes: setting a characteristics ruleset for selecting a primary product to be processed; selecting at least one distinguishable quantity of the primary product by performing the above-described method for selecting a distinguishable quantity of a product based on the set requirements list; processing the primary product of at least one distinguishable quantity of the selected distinguishable quantity or selected distinguishable quantities into at least one quantity of the secondary product. Here, only selected quantities of primary product(s) are allowed for further processing, which allows a very fine control of a quality of the secondary product.

One main application of this invention is to find a quality of a product. This task is solved by a method for determining a product quality of a distinguishable quantity of a product according to another aspect of this invention. This suggested method includes: providing an object identifier indicative of a pre-selected distinguishable quantity; providing access to the above-described database; accessing a data structure, which includes a data item holding an own object identifier corresponding to the provided object identifier; determining at least one product quality of the primary product of the distinguishable quantity based on at least on data item included in the accessed data structure and a provided pre-set quality determination ruleset; and outputting the determines product quality. A quality may be any product property of combination of product properties derivable from the data structure. This method allows an evaluation derived from the processing state values. In other words, another layer of precise product properties can be accessed.

It is important to not forget that it is not always one complete quantity of a primary product is processed into one complete quantity of a secondary product. Thus, this method preferably takes processing quotas into account, which may be commonly known and/or set into a respective data item and be indicative of a quota of a specific primary quantity used to obtain the quantity of the secondary product indicated by the own object identifier.

Preferably, said outputting includes outputting the determined product quality associated to the provided object identifier. For example, the quality and the object identifier are handed over to another method, and/or the method includes setting a data item of the data structure indicated by said object identifier such that this data item holds the determined product quality. Thus, the determination must not be repeated.

Optionally, this method may include: performing, preferably in a recursive manner: reading from the accessed data structure an object identifier indicative of a distinguishable quantity of a primary product to the product of the distinguishable quantity indicated by the own object identifier; accessing a data structure, which includes a data item holding the own object identifier indicative of the provided distinguishable quantity; determining at least one product quality of the primary product of the distinguishable quantity based on at least on data item included in the accessed data structure and a provided pre-set quality determination ruleset. An illustrative example for a product quality is a carbon dioxide footprint of a chemical product. If every preceding processing documents in the respective data structure the amount of exhausted carbon dioxide, then the total exhausted carbon dioxide for the quantity can thus be determined.

Another aspect of this invention is that a method for producing a secondary product with a processing device is suggested, which includes: providing a distinguishable quantity of a primary product, which quantity is linked to an object identifier indicative of the distinguishable quantity; performing the above method for determining a product quality, based on the object identifier; setting at least one process parameter of a processing device based on the at least one determined product quality; and processing at least a part of the primary product of the provided distinguishable quantity into at least a part of a distinguishable quantity of a secondary product by means of said processing device or by said processing device. This method uses the above determination method for adapting a process parameter to match the determined product quality. Thus, based on the precise product properties, an advanced secondary product may be obtained.

Another aspect of this invention refers to a computer program or a computer program product including instructions, wherein the instructions, when interpreted or executed by at least one processor unit, cause the at least one processor unit to perform any one of the above methods.

According to a further aspect, a computer-readable medium storing the above computer program instructions is suggested. The computer-readable medium is, in particular, a non-transitory computer-readable medium.

In embodiments, a computer-program or computer-program product comprises a program code for executing the above-described methods and functions by a computerized control device when run on at least one computerized device. A computer program product, such as a computer program means, may be embodied as a memory card, USB stick, CD-ROM, DVD or as a file which may be downloaded from a server in a network. For example, such a file may be provided by transferring the file including the computer program product from a wireless communication network.

Described in fewer words: A suggested method for processing at least one primary product into a secondary product includes the steps: providing at least one primary product; processing the at least one primary product into a quantity of a secondary product by a processing device; generating a report by a state reporting device associated with the processing device, wherein said report includes at least one state value indicative of a processing state during the processing step; generating an unique object identifier indicative of said quantity obtained by said processing during the processing step; generating a data structure having at least two data items, wherein one data item holds the object identifier, and wherein one further data item holds said generated report; and providing said quantity obtained by said processing during the processing step. Another suggested method for processing a primary product into a secondary product includes the steps: providing at least one quantity of a primary product; providing at least one a data structure associated with the quantity of a primary product, said data structure including one data item holding an object identifier indicative of the quantity of the primary product; processing the at least one primary product into a quantity of a secondary product by a processing device; generating an unique object identifier indicative of said obtained quantity; generating a new data structure having at least one data item holding the generated object identifier and one data item holding the object identifier indicative of the quantity of the primary product; and providing said quantity obtained during the processing step. Another suggested method for processing a primary product into a secondary product includes the steps: providing a primary product; providing access to a database configured to include multiple data structures; processing the primary product into a quantity of a secondary product by a processing device; generating a report by a state reporting device associated with the processing device, said report being indicative of a processing state during the processing step; generating an unique object identifier indicative of said quantity obtained during said processing step; generating a data structure having one data item holding the object identifier and one data item holding said report; adding into the database the data structure associated with the quantity of the secondary product; and providing said quantity.

Further possible implementations or alternative solutions of the invention also encompass combinations - that are not explicitly mentioned herein - of features described above or below in regard to the embodiments. The person skilled in the art may also add individual or isolated aspects and features to the most basic form of the invention.

Further embodiments, features and advantages of the present invention will become apparent from the subsequent description and dependent claims, taken in conjunction with the accompanying drawings, in which:
Fig. 1 schematically shows a scenario where a method according to an embodiment of the invention is implemented, and

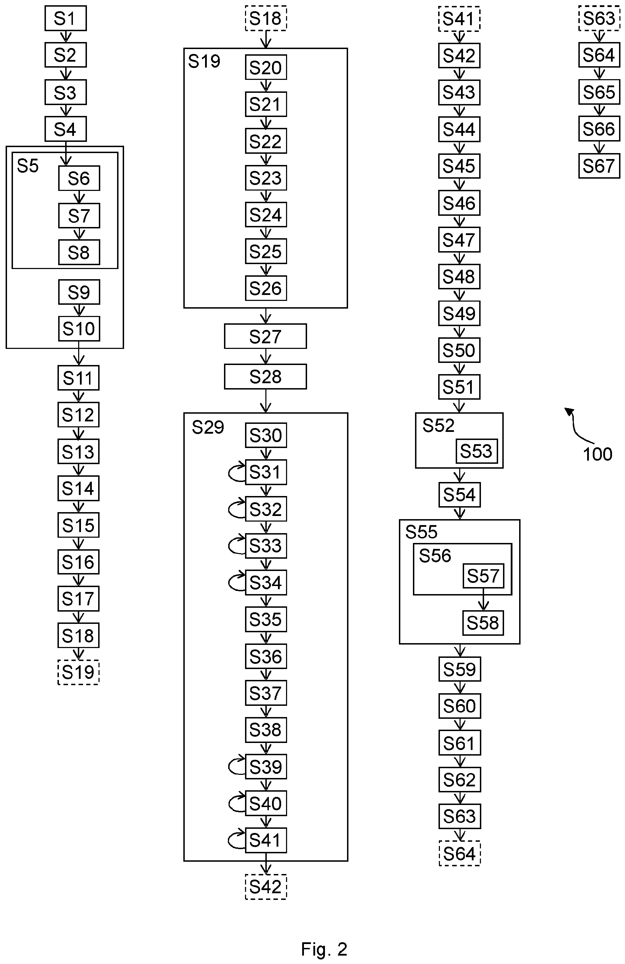

Fig. 2 shows a flow diagram of the method according to an embodiment of the invention.

In the Figures, like reference numerals designate like or functionally equivalent elements, unless otherwise indicated.

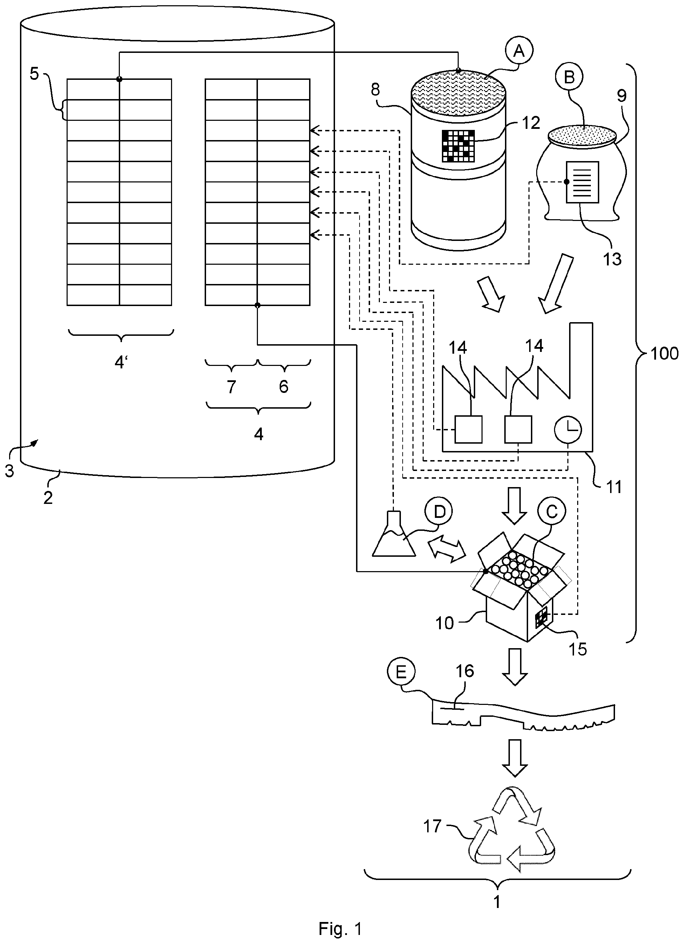

Fig. 1 shows a scenario where the invention is applied. On the right side of Fig. 1 is depicted a product life cycle 1, and on the left is depicted a server 2 holding a database 3.

In this symbolic product life cycle 1, there are provided a liquid A in a barrel 8 and a powder B in a sack 9. These products A and B are industrially processed into a granulate C, which is packed in a box 10. A sample D is taken from the granulate C. The granulate C is later formed into a final product, such as a shoe sole E. After its product lifetime, the shoe sole E is disposed and recycled. The liquid A and the powder B are primary products to the granulate C. The granulate C is a secondary product to the liquid A and the powder B, and it is a primary product to the shoe sole E. That is, the terms "primary product" and "secondary product" are relative terms indicating a timely order and/or a predecessor-successor-order.

Next will be explained a method 100 for producing the granulate C from the liquid A and the powder B. However, this explanation serves illustration purposes mainly, and thus there are many optional steps included. Further, the shown sequence of steps is intended merely as a preferred example, but not as a necessary restriction.

In a first step S1, access to the database 3 is provided. The database 3 is configured to include multiple data structures 4.

A data structure 4 in this example is associated with a distinguishable quantity of a product.

Each data structure 4 has at least one data item 5. Preferably, each data item 5 has a content 6 and a label 7 indicative of a type of the content. Each data structure 4 has one own object identifier. The object identifier is unique, and thus it is configured to indicate a distinguishable quantity of a product. The object identifier is held in one data item 5. It is possible that a data structure 4 holds one or more further object identifiers in other data items, for example as a reference to a primary product; however these one or more additional object identifiers are not the "own" object identifier. Due to the single and unique own object identifier one quantity of a product is fixed as the associated quantity.

The products of this example are the liquid A, the powder B, the granulate C, the sample D, and the shoe sole E. The respective quantities are volumetrically defined by the barrel 8 of the liquid A, the sack 9 of the powder B, the box 10 of the granulate C, the flask of the sample D, and the shoe sole E itself.

In a next step S2, a characteristics ruleset for selecting a primary product is set. The characteristics ruleset specifies at least one characteristic value determination rule configured to determine at least on characteristic value based on at least one record, and which specifies at least one record applicable to the characteristics ruleset. For example, a characteristics ruleset for selecting one barrel 8 of liquid A out of many barrels 8 is set. For example, a viscosity below a threshold is needed, and it is known that the viscosity of the liquid A is affected by a maximum temperature of a preceding process. In this exemplary case, there might be specified a rule defining a maximum temperature for a time series of temperatures, and the temperature of the preceding process, as indicated by the corresponding label 7, is set as the record to which the rule is to be applied on. The characteristics ruleset may be set in advance.

In a next step S3, at least one available quantity is selected.

In a next step S4, the previously set characteristics ruleset is provided. For example, it may be loaded into a memory, it may be delivered via email from another department, and/or it may be retrieved from a database, including the database 3.

Next is a step S5, wherein sub-steps S6, S7, and S8 are performed at least once, but may be recursively performed. First, in sub-step S6, one data structure 4 held by the database 3 is accessed via the database 3. In the next sub-step S7, at least one report held in a data item 5 of the accessed data structure 4', which is specified by the characteristics ruleset, is read. Then, in the sub-step S8, at least one characteristic value is determined by applying the at least one read record specified by the characteristics ruleset to at least one rule specified by the characteristics ruleset.

If the accessed data structure 4' holds further object identifiers, which indicate primary products used to obtain the associated quantity of a product, then the method preferably repeats the sub-steps of S5 for every object identifier. Preferably, the additional steps S7 do not result in additional characteristic values, but in a precision gain to the one or more characteristic values determined in the first performing of step S7.

Next, in a step S9, the at least one determined characteristic value is stored by setting a data item 5 of the data structure 4, which data structure 4 is associated to the quantity selected in step S3.

A preferred option is to implement a binning ruleset in steps S2 and S4. That is, the characteristic value is merely an indicator of a bin. For example, if the temperature check results in the finding, that the viscosity is in the desired range, then the characteristic value might be one of the following simple examples: "viscosity: good", "temperature under threshold", and/or a graphic symbol like a green circle.

In a next step S10, each own object identifier is added to a selection list, which own object identifier is held in a data item 5 of the accessed data structure 4' if a pre-set criterion is matched by the at least one characteristic value determined in S8.

Then, in a step S11, each data structure 4', that is holding an own object identifier listed in the selection list, is provided, such as it is made available and loaded. This step may include paying a fee for accessing or using the data structure 4'.

For example, if there are more than one quantities available, then a quantity of the liquid A from all quantities associated to the selection list object identifiers can be chosen based on its age and/or based on a comparison of the ages. Thus, an age indicator indicative of an age of the liquid A is read from the data structure 4' in a step S12. Further, in step S12, a report may be read from the data structure 4', which report includes at least one state value indicative of a processing state of a process performed to obtain the quantity of the liquid A within the barrel 8.

In a next step S13, for example, an age of the liquid A may be determined. For example, a production date may be read, which is held by a data item 5 of the data structure 4'. Then, in a step S14, one of the quantities indicated by the selection list is chosen.

In a next step S11, a quantity of a primary product is provided. For example, the barrel 8 of the liquid A is provided, such as it is delivered to a processing device 11, which may be a simple machine but also a processing plant and/or any device in between.

In another example, there is no selection process based on the characteristics ruleset and the age criterion. In this case, the barrel 8 having the quantity of the liquid A is provided in step S15. Then, a QR code 12 on the barrel 8 may be scanned. This QR-code 12 may hold the object identifier associated with the quantity of liquid A in the barrel 8. Then, in step S11, the data structure 4' is made available. In another example without the database 3, the data structure 4' itself may be held in the QR-code 12.

Then, step S15 is repeated for the powder B of the sack 9. The powder B has no associated data structure. Rather, it has a lot number, which is printed on a tag 13. Thus, by reading the tag 13, the lot number is provided as a primary product lot identifier in a next step S16.

In a next step, a data owner indicator is provided in step S17. For example, the data owner indicator is selected to be indicative of a company, that is a legal person, owning the processing device 17.

In a next optional step S18, a process parameter of the processing device 11 may be adjusted based on a report held in the data structure 4' read in step S12.

In a next step S19, the primary products, here the liquid A and the powder B, are processed to or into a quantity of the granulate C. The processing is performed by means of the processing device 11 or by the processing device 11.

It is efficient but not necessary to have a 1:1 ratio of quantities. That is, it is possible, for example, to use more than one barrel 8 of the liquid A and less than one sack 9 of the powder B to obtain exactly one distinguishable quantity of the granulate C.

During said processing step S19, sub-steps S20 to S26 may for example be performed.

In a step S20, at least one report of a state value of the processing is generated. Preferably, each state variable or time series of a state variable is reported separately, such that there are preferably one or more reports generated. Each report is generated by a state reporting device 14. Each report includes at least one state value, which is indicative of a processing state during the processing step S19.

In a next step S21, a processing device identifier is recorded, which can be used to distinguish the processing device 11 from other processing devices.

In a next step S22, a state reporting device identifier is recorded. The state reporting device identifier is recorded associated with the report generated by the respective state reporting device. For example in this case, there might be a data item labelled "report 1" holding a report from a first state reporting device 14, a data item labelled "state reporting device 1" holding a serial number of the first state reporting device 14, a data item labelled "report 2" holding a report from a second state reporting device 14, and a data item labelled "state reporting device 2" holding a serial number of the second state reporting device 14. It is not necessary but recommended to record a state recording device identifier for each recorded report.

In a next step S23, a deviation value may be recorded for one or more recorded state values of the one or more recorded state values. A deviation value is indicative of a deviation of the recorded state value from a target value. For example in a case where an exhaustive time series is recorded, some users or applications might only be interested in a summarizing value whereas other users or applications might need the whole time series. Thus, in order to save time later on, the deviation is determined and recorded to serve as a summarizing value.

In a next step S24, a product property value is recorded. For example when a producer of the granulate C does not want to disclose internal knowledge, it is beneficial to record a product property, which follows from one or more state values and/or other sources.

In a next step S25, a deviation value indicative of a deviation of said product property value might be recorded.

Also during the processing step and/or at an end of the processing step, a time or timestamp of the processing or of an end of the processing is recorded in a step S26.

Next, indicators to be stored in a new data structure 4 are determined.

For example, in a step S27, an age indicator for a provided quantity of a primary product A, B is determined. For example, the age indicator for the liquid A is determined based on the time read in step S12 and the time recorded in step S26.

In a next step S28, a unique object identifier is generated, such that it is indicative of the quantity of granulate C, which quantity was obtained by the above processing during the processing step S19.

Then, in step S29, a new data structure 4 is generated. The data structure 4 represents the quantity of granulate C obtained during the above processing step S19. In this case, step S29 involves sub-steps S30 to S41.

In a step S30, a data item is set, which holds the object identifier generated in step S28 to be the own object identifier of this new data structure 4, as it is indicative of the quantity of granulate C, which is represented by this data structure 4.

In a next step S31, a data item is set, which holds one of the reports generated in step S20. Step S31 is preferably repeated for each report generated.

Then, in a step S32, the age indicator determined in S27 may be set to a data item 5 of the data structure 4, that is associated with the quantity of the granulate C, linked with the object identifier indicative of the quantity of the primary product A. For example, the data item 5 of the data structure 4 may be labelled "age indicator for product A" and have the age indicator as a content 6.

In a next step S33, a data item is set, which holds a state reporting device identifier generated in step S22. Step S33 is preferably repeated for each state reporting device identifier.

In a next step S34, a data item is set, which holds the primary product lot identifier provided in step S16. Step S34 is preferably repeated for each primary product lot identifier.

In a next step S35, a data item is set, which holds the object identifier indicative of the quantity of the primary product, in this case: the liquid A, chosen in step S14. Step S35 is preferably repeated for each object identifier indicative of the quantity of the primary product. Alternatively, an object identifier may for example be gained in step S10.

In a next step S36, a data item is set, which holds the processing device identifier recorded in step S21. If the processing in step S19 is performed on a series of processing devices, there may be recorded and set more than one processing device identifiers.

In a next step S37, a data item is set, which holds the data owner indicator provided in step S17.

In a next step S38, a data item is set, which holds the production timestamp determined in step S26.

In a next step S39, a data item is set, which holds a deviation value recorded step S23. If there is recorded more than one deviation value, then this step preferably is repeated.

In a next step S40, a data item is set, which holds a product property value recorded in step S24. If there are recorded more than one product property values, then this step preferably is repeated.

In a next step S41, a data item is set, which holds a deviation value recorded in step S25 of the product property value recorded in step S24. If there are recorded more than one a deviation value of a product property values, then this step preferably is repeated.

In a next step S42, the sample D is taken from the quantity of granulate C obtained in step S19. In a next step S43, a test result is generated, by testing at least one property of the granulate C. An exemplary method for generating a test result, performed in this case includes: performing steps S42 and S43; generating an unique object identifier indicative of the test result in a step S44; and generating a data structure having at least two data items, wherein: one data item holds the object identifier indicative of the test result, one optional data item holds the object identifier indicative of the quantity of a product C from which quantity the sample was taken, and one further data item holds the generated test result.

That is, in step S44 is generated a test result indicator. Then in a step S45, the method 100 may set a data item of the data structure 4 representing the quantity of the granulate C, such that it holds the test result indicator generated in step S44. However, it is preferred to either include the object identifier of the quantity of the granulate C in the data structure representing the test sample or to include the test result indicator in the data structure 4 representing the quantity of the granulate C.

In a next step S46, a cryptographic representation of the data structure 4' associated with the liquid A may be determined. This cryptographic representation is then set in a data item 5 of the data structure 4 in a step S47. Thus, it is possible for a customer of the granulate C to reliably reproduce a blockchain-type history of predecessor products, in this case product A, and the properties of this predecessor product A. This option is preferably combined with steps S11, S15, S34, and S35.

In next steps S48, S49, and S50 the steps S4, S8, and S9 are repeated. However in this case, the characteristic value is determined for a report generated in step S20 and/or during step S19.

Preferably, the characteristics ruleset differs between steps S4 to S9 and steps S48 to S50. That is, this characteristic value represents a characteristic of the granulate C. Thus, computation power can be saved in future, which is beneficial if more than one requests for the characteristic value are to be expected.

In a next step S51, at least one data item 5 of the data structure 4 is encrypted. Thus, confidentiality of data, which is shared not only with a restricted number of parties, can be ensured. It is preferred to have different encryption and de-encryption key sets for different data items. That way access can be granted to selected parameters only.

A preferred combination of steps is steps S48, S49, S50, and S51. This combination has the advantageous effect of graduated confidentiality. For example, all parties get access to the characteristic values, but only few parties get a key for de-encrypting.

In a next step S52, the quantity of the granulate C obtained in step S19 is provided. Preferably, the quantity is separately provided, thus being rendered distinguishable. Preferably, the quantity is provided at an identifiable location. Preferably, said providing of the quantity includes a step S53 of packaging said quantity of granulates C obtained from said processing into a package. The package in this case is the box 10. Another preferred example of the package is a so-called octabin.

Then, in a next step S54, a data item 5 of the data structure 4 is set, which holds a location identifier indicative of the location, where the quantity is provided in above step S52.

In a next preferred step, the separated quantity of the granulate C obtained from step S19 is linked to the data structure 4 generated in step S29. This preferably includes a step S56 of attaching a link object to said box 10. In the example of Fig. 1, said step S56 has a sub-step S57, wherein a link object, which is another QR-code 15 for example, is printed on the box 10. The QR-code 15 preferably includes the own object identifier of the quantity of granulate C comprised in the box 10.

It is also possible to attach an identifier device, to a secondary product in a next step S58. For example, if the method was performed for the process phase of producing shoe soles E from granulate C, an RFID tag 16 may be implemented into the shoe sole E. The RFID tag 16 is one example for an identifier indicative of an associated own object identifier (of the shoe sole E in this case). Thus, the properties of the shoe sole E can be downloaded by a recycling device 17 during recycling of the shoe sole E.

In a next step S59, a cryptographic representation of the data structure 4 is determined, before in a step S 60, the data structure is signed. However, there are methods where the steps S59, S60 are performed in reversed order. The cryptographic representation of the signed data structure 4 is then set into a data item 5 in a step S61. Thus, it is possible to reliably attribute the contents 6 of the data structure 4 to a signature.

Preferably after signing, a quantity owner indicator is provided in step S62 and is set to a data item 5 in a step S63. In most cases, an ownership of the quantity of granulate C will change, for example when the granulate C is sold from a producer of granulates to a producer of shoe soles. Thus, the change of ownership can be documented at the single instance, which is the database 3.

It is to be noted here that after a change of ownership has been set to the associated data item, preferably the steps S46 and S47 are repeated for the sake of increased reliability and trust.

Then in a step S64, a status indicator is generated. The status indicator is indicative of a current status of a variable factor of the quantity of the granulate C. Next, a data item 5 of the data structure 4 associated with the quantity of the granulate C is set in a step S65, such that it holds said status indicator. The status indicator may indicate, for example, whether the quantity of the granulate C can be bought, whether it has been produced yet, whether it still exists or is used up, and many more. That is, the status indicator makes it possible to perform logistical tasks in addition to technical tasks with the same database 3. Thus, consistency is improved and a data storage for redundant data can be reduced.

Then, the method 100 ends with a step S66, where the data structure associated with the liquid A is added to and/or updated in the database 3, and a step S67, where the data structure associated with the granulate C is added to and/or updated in the database 3.

### Reference signs:

- 1: product life cycle
- 2: server
- 3: database
- 4: data structure
- 4': data structure
- 5: data item
- 6: content of data item
- 7: label of data item
- 8: barrel
- 9: sack
- 10: box
- 11: processing device
- 12: QR-code
- 13: tag
- 14: state reporting device
- 15: QR-code
- 16: RFID tag
- 17: recycling device
- 100: method
- A: liquid
- B: powder
- C: granulate
- D: sample
- E: shoe sole
- S1: providing access to a database
- S2: setting a characteristics ruleset for selecting a primary product
- S3: selecting at least one quantity
- S4: providing the pre-set characteristics ruleset
- S5: performing in a recursive manner
- S6: accessing via the database one data structure
- S7: reading at least one report held in an data item
- S8: determining at least one characteristic value
- S9: setting a data item holding a determined characteristic value
- S10: adding to a selection list an own object identifier
- S11: providing a data structure associated with the primary product
- S12: reading from the data structure associated with the primary product
- S13: determining an age for each quantity of a primary product
- S14: choosing a quantity of a primary product based on its age
- S15: providing a quantity of a primary product
- S16: providing a primary product lot identifier
- S17: providing a data owner indicator
- S18: adjusting a process parameter
- S19: processing the quantity of the primary product into a quantity of a secondary product
- S20: generating a report including a state value
- S21: recording a processing device identifier
- S22: recording a state reporting device identifier
- S23: recording a deviation value of the recorded state value
- S24: recording a product property value
- S25: recording a deviation value of the recorded product property value
- S26: determining a production timestamp
- S27: determining an age indicator for a quantity of a primary product
- S28: generating an unique object identifier
- S29: generating a new data structure
- S30: setting a data item holding an own object identifier
- S31: setting a data item holding a report
- S32: setting a data item holding an age indicator for a quantity of a primary product
- S33: setting a data item holding a state reporting device identifier
- S34: setting a data item holding a primary product lot indicator
- S35: setting a data item holding an object identifier indicative of a quantity of a primary product
- S36: setting a data item holding a processing device identifier
- S37: setting a data item holding a data owner indicator
- S38: setting a data item holding a production timestamp
- S39: setting a data item holding a deviation value of the recorded state value
- S40: setting a data item holding a product property value
- S41: setting a data item holding a deviation value of the recorded product property value
- S42: taking a sample
- S43: generating a test result
- S44: generating a test result indicator
- S45: setting a data item holding a test result indicator
- S46: determining a cryptographic representation of a data structure associated with a primary product
- S47: setting a data item holding a cryptographic representation of a data structure associated with a primary product
- S48: providing a characteristics ruleset
- S49: determining at least one characteristic value
- S50: setting a data item holding a characteristic value
- S51: encrypting at least one data item
- S52: separately providing a quantity at an identifiable location
- S53: packaging the quantity into a package
- S54: setting a data item holding a location identifier
- S55: linking the separated quantity to the generated data structure
- S56: attaching a link object to said package
- S57: printing the link object on the package
- S58: attaching an identifier device to a secondary product
- S59: determining a cryptographic representation of the data structure
- S60: signing the data structure
- S61: setting a data item holding a cryptographic representation of the signed data structure
- S62: providing a quantity owner indicator
- S63: setting a data item holding a quantity owner indicator
- S64: generating a status indicator
- S65: setting a data item holding a status indicator
- S66: adding into a database a data structure associated with the primary product
- S67: adding into a database a data structure associated with the secondary product

## Claims

1. A method (100) for processing at least one primary product (A, B) into at least one secondary product (C), including the steps: providing (S15) at least one primary product (A,B); processing (S19) the at least one primary product (A,B) into a quantity of a secondary product (C) by a processing device (11); generating (S20) a report by a state reporting device (14) associated with the processing device (11), wherein said report includes at least one state value indicative of a processing state during the processing step (S19); generating (S28) an unique object identifier indicative of said quantity, which quantity is obtained by said processing during the processing step (S19); generating (S29) a data structure (4) having at least two data items (5), wherein one data item (5) holds the object identifier, and wherein one further data item (5) holds said generated report; and providing (S52) said quantity obtained by said processing during the processing step (S19).

2. The method according to claim 1, wherein during said providing (S52) said quantity is separately provided, and wherein the method includes: linking (S55) the separated quantity to the generated data structure (4).

3. The method according to claim 2, wherein said linking (S55) includes attaching (S56) a link object (15, 16) to said package (10); wherein said attaching (S56) preferably includes: printing (S57) the link object (15) on the package (10), writing the link object to a data storage attached to the package, and/or providing the link object within the package.

4. A method for processing at least one primary product (A, B) into at least one secondary product (C), including the steps: providing (S15) at least one primary product (A, B); processing (S19) the at least one primary product (A, B) into a quantity of a secondary product (C) by a processing device (11); generating (S20) a report by a state reporting device (14) associated with the processing device (11), wherein said report includes at least one state value indicative of a processing state during the processing step (S19); generating (S28) an unique object identifier indicative of said processing during the processing step; generating (S29) a data structure (4) having at least two data items (5), wherein one data item (5) holds the object identifier, and wherein one further data item (5) holds said generated report; and providing (S52) said quantity obtained by said processing during the processing step (S19).

5. The method according to any preceding claim, wherein said method includes: taking (S42) a sample (D) from the quantity of the secondary product (C); generating (S43) a test result indicative of at least one material property of the secondary product (C) of the processed and/or separated quantity; generating (S44) a test result indicator indicative of the generated test result; and setting (S45) a data item (5) of the data structure (4) such that it holds the test result indicator.

6. The method according to any preceding claim, wherein said method includes: providing (S48) a pre-set characteristics ruleset, which specifies at least one characteristic value determination rule configured to determine at least one characteristic value based on at least one record, and which specifies at least one record applicable to the characteristics ruleset; and determining (S49) at least one characteristic value by applying the at least one record specified by the characteristics ruleset to at least one rule specified by the characteristics ruleset.

7. The method according to claim 6, wherein the method further includes: setting (S50) a data item (5) of the data structure (4) such that it holds the at least one determined characteristic value.

8. The method according to any preceding claim, wherein the method further includes: signing (S60) the data structure by setting a data item (5) of the data structure (4) such that it holds a signature indicative of natural or legal person and/or a group thereof; and setting (S61) a data item of the data structure such that it holds a cryptographic representation of the signed data structure (4).

9. The method according to any preceding claim, wherein: the primary product is a chemical product or a chemical raw material, and the secondary product is a chemical product.

10. A data structure (4) having at least two data items (5), wherein: one data item (5) holds an unique object identifier, that is indicative of a processing during a processing step (S19) and/or of a quantity obtained by said processing during said processing step (S19); and one further data item (5) holds report, which includes at least one state value indicative of a processing state of said processing step (S19).

11. The data structure of claim 10, having at least one of the following data items (5): a data item (5) holding a location identifier indicative of an identifiable location of said quantity, that is indicated by the object identifier; a data item (5) holding a data owner indicator indicative of a natural or legal person and/or a group thereof owning this data structure; a data item (5) holding a quantity owner indicator indicative of a natural or legal person and/or a group thereof owning said quantity indicated by the object identifier; a data item (5) holding a primary product lot identifier indicative of a lot of a primary product to the secondary product of said quantity, that is indicated by the object identifier; a data item (5) holding a test result indicator indicative of a test result based on a sample taken from said quantity indicated by the object identifier; a data item (5) holding another report, that is configured to include at least one state value indicative of a processing state of a step of processing at least one primary product (A, B) into said quantity of said secondary product (C); and/or a data item (5) holding a characteristic value and/or series of characteristic values, that is characteristic for the at least one report.

12. A data carrier signal carrying a data structure (4) according to one of claims 10 or 11, and/or as provided by the method (100) for generating a data structure according to one of claims 1 to 9.

13. A method (100) for producing a secondary product (C) from a quantity of a primary product (A), including the steps: providing (S11) the data structure according to one of claims 10 or 11, and/or as provided by the method for processing at least one primary product (A, B) into a secondary product (C) according to one of claims 1 to 9; providing (S15) the quantity of a primary product (A), which quantity is indicated by the own object identifier held by the data structure (4); reading (S12) from the data structure a report, which includes at least one state value indicative of a processing state of the primary product of the provided quantity; adjusting (S18) a process parameter of a processing device based on the read report; and processing (S19) the primary product (A) of the provided quantity into the secondary product (C) by the processing device (11).

14. A method (100) for producing a secondary product (C) from a quantity of a primary product (A, B), including the steps: providing (S11) the data structure according to one of claims 10 or 11, and/or as provided by the method for processing at least one primary product (A, B) into a secondary product (C) according to one of claims 1 to 9; providing (S15) the quantity of the primary product (A) identified by the object identifier held by the data structure (4); reading (S7) from the data structure a report, which includes at least one state value indicative of a processing state of the primary product (A) of the provided quantity; processing (S19) the primary product of the provided quantity into the secondary product (C) by a processing device (11); recording (S20, S23, S24, S25) at least one of: a state value of the processing device during said processing step (S19), a deviation value of the recorded state value from a target state value, a product property value of the secondary product during and/or after said processing step (S19), and/or a deviation value of the recorded product property value from a target property value; and providing (S31, S39, S40, S41, S67) a data set (5) including the at least on recorded value and the object identifier indicative of the provided quantity of the primary product (A).

15. A computer program product including instructions, wherein the instructions, when interpreted or executed by at least one processor unit, cause the at least one processor unit to perform the method according to one of claims 1 to 9 and/or 13 to 14
